# EUROPEAN PATENT SPECIFICATION

(11) **EP 0 381 407 B1**
(45) Date of publication and mention of the grant of the patent: **05.07.1995**
(21) Application number: 90300883.7
(22) Date of filing: 29.01.1990
(51) Int. Cl.: G11B 33/12, G11B 33/02, G11B 25/04

(54) **Magnetic disk drive**
Magnetplatteneinheit
Unité de disque magnétique

(30) Priority: 31.01.1989 US 305236
(43) Date of publication of application: 08.08.1990
(73) Proprietor: International Business Machines Corporation, Armonk, N.Y. 10504 (US)
(72) Inventor: Rigotti, James Michael, Rochester, Minnesota 55904 (US); Tufty, Lyle Rick, Elgin, Minnesota 55932 (US); Zell, Michael Norman, Rochester, Minnesota 55904 (US)
(74) Representative: Moss, Robert Douglas

(56) References cited:
- EP-A- 0 222 939
- EP-A- 0 296 530
- US-A- 4 712 146

## Description

### Field of the Invention

This invention relates to magnetic disk drives.

### Background

Magnetic disk drives are designed to attain ever increasing storage capacities while continuing to meet a high standard of error free operation and reliability. In addition, this must often be accomplished within the constraints of a form factor for the disk size in use. A form factor is the standard limitation that is recognised in the industry for the drive length, width and height. In practice this has been a defacto standard usually set by the dimensions previously selected for a flexible disk drive that is subsequently replaced by the hard disk drive. The hard disk file must fit into the same space previously occupied by the flexible disk drive, and thus the form factor dimensions are established more by circumstance than by design.

To increase the storage capacity within a given form factor, either the areal density on the individual disk surfaces or the total surface area within the device envelope (or both) must be increased.

### Disclosure of the Invention

Storage capacity within a given form factor and for a given areal density of data on a disk surface has not been maximised in prior art disk drive designs. Accordingly, the invention provides a magnetic disk drive including a disk stack assembly with a plurality of disks mounted on a spindle for rotation about a common axis; an actuator for supporting and positioning, relative to said disks, transducer heads for the transfer of data to and from said disks; a frame which supports said disk stack assembly at each end of said spindle, and which also supports said actuator; electrical components for controlling the operation of said disk drive; EP-A- 0 222 939 shows a prior art disk drive with the features mentioned above. The disk drive of the invention is further characterized by comprising an outer support structure and shock mounting means for supporting said frame within said outer support structure; and
said frame extends across substantially the maximum dimension of said disk drive in a direction axially of said disk stack assembly and wherein said electrical components are mounted on said outer support structure radially of said disk stack assembly.

Such a magnetic disk drive has the maximum height or axial distance allowance for storage disks together with good structural stiffness. The design of the frame makes the most efficient use of space in the vertical direction by using only a single structural element at top and bottom to permit maximum space for the disks and actuator. This design helps to provide maximum stiffness and ensures a stable set of relationships for parallelism between the spindle axis and the actuator axis.

Preferably, the frame is a single box-type rigid cast member. It is also preferred that the frame is adjoined by a cover, thereby enclosing the disk stack assembly and that the line of adjoinment between said cover and said frame is arranged such that adjacent the maximum width of said disks, said disks are enclosed by said cover as opposed to said frame.

The cover which may be a deep drawn thin aluminium element is sealed to the frame by a band of tape that surrounds the junction of the cover with the frame.

Other preferred features of the invention are that, at the end of the frame opposite the cover and disk stack assembly is an opening which is sealed by a cast cover element secured to said frame. The cast cover element serves as a structural member that enhances the stiffness of said frame for parallelogram modes of vibration. The actuator is a rotary actuator mounted for rotation about a shaft, said shaft being in parallel with said spindle and supported at each end by said frame.

Although of general utility, the advantages of the invention are especially pertinent to disk drives of predetermined length, width and height dimensions, such as those governed by an industry standard form factor.

### Brief Description of the Drawings

Fig. 1 is an isometric view of an assembled disk drive according to the present invention;
Fig. 2 is an exploded view of the disk drive of Fig. 1.

### Detailed Description

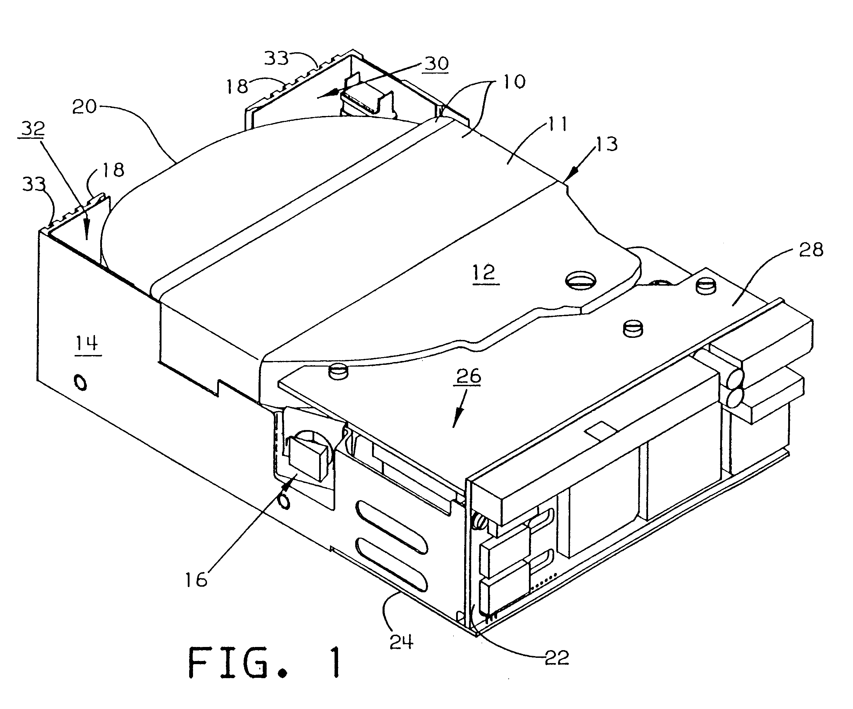

Referring to the drawings, Fig. 1 is a completely assembled form factor disk drive illustrating the preferred embodiment of the invention. The disk drive cast body 12 is shock mounted in outer frame 14 by three shock mounts 16 (one of which is shown). The disk stack assembly is dust sealed by cover 10 which is secured and sealed to body 12 by a band of thin tape 11. The sealed enclosure formed by the box frame cast body 12, cover 10 and sealing tape 11 serves to enclose and seal the disk stack and actuator assemblies to form a head-disk assembly (HDA) 13. The body 12 portion which overlies the disks and transducer mounting structure fills the vertical height of the disk drive form factor, except for sufficient clearance to permit passage of the flat cable connected to the motor driver circuits and to accommodate the vertical sway associated with the shock mounting. The outer frame front wall 18 is cut away to allow the front surface 20 of disk stack cover 10 to approach the forwardmost limit of the form factor length dimension.

The electronics for the drive, which are positioned outside the HDA 13, are attached to outer frame 14 and packed into the corners between the HDA 13 and outer frame 14. The bus interface electronics are printed on circuit card 22 attached to the back wall of outer frame 14. The data channel and servo circuits are on a micro card 24 attached at the rear bottom of outer frame 14 (only the edges of which are visible in Fig. 1), a stack of cards in the corner 26 of the drive, and a data channel card 28 mounted at the rear top of outer frame 14. The spindle motor drive circuits are mounted on a flex cable folded and bonded to the inner walls of outer frame 14 in the corner 30. The voice coil motor drive circuits for the actuator are also mounted on a flex cable folded and bonded to the inner walls of outer frame 14 in corner 32. The outer frame front wall 18 has grooves 33 to provide an extended surface for dissipation of heat from the motor drive circuitry secured to the inner surface of wall 18.

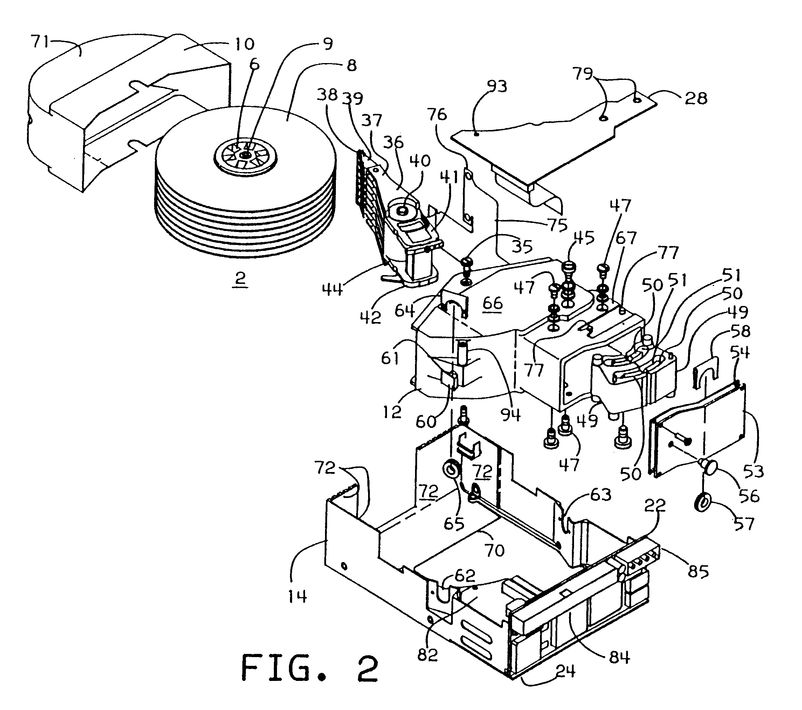

Fig. 2 shows the organisation of the mechanical and electrical elements within the form factor and mounted on outer frame 14. The disks 8 are mounted about a hub 6 which contains the spindle drive motor (not shown). The spindle shaft 9, which forms a part of the wound stator of the spindle drive motor, is secured at each end to the body 12 by bolts 35 (one of which is shown). The actuator body 36 has a comb portion that presents a series of arms 37. The upper and lower arms 37 carry a single transducer 38 and resilient suspension 39 which respectively confront the uppermost and lowermost data surfaces of the stack of disks 8, while each intermediate arm that extends between confronting disk surfaces carries two transducer/suspension assemblies that confront the two data surfaces facing the supporting arm. At the opposite side of the shaft 40, about which the body 36 pivots, projections 41, 42 support a voice coil motor coil 44. The actuator shaft 40 is secured to body 12 by an upper bolt 45 and a similar lower bolt which is not visible. Also mounted on body 12 by a series of bolts 47 are a pair of voice coil motor core elements 49 in the form of members having an E shaped cross section which abut one another and which have permanent magnets 50 attached to them. This core assembly provides an air gap 51 across which a magnetic field is maintained and in which the vertically extending stretches of the voice coil 44 are positioned. A cover 53 and gasket 54 are secured to the open end of body 12 to cover and seal the end.

A shock mount pin 56 is mounted on cover 53. The shank portion of pin 56 is surrounded by an elastomer ring 57 and received in a U-shaped recess (not visible) in the back wall of frame 14 and retained therein by a clip 58. Body 12 projection 60 includes a shank 61 which is surrounded by an elastomer ring 65, received in U-shaped frame recess 62 and retained therein by clip 64. A similar shock mount assembly, carried by body 12, is received in outer frame 14 U-shaped recess 63.

The maximum height of body 12 extends from surface 66 to the corresponding bottom surface. This vertical dimension uses the total height available within the form factor vertical dimension less the thickness of the flex cable 70 and the vertical sway space required by the shock mounting. The casting end portion 67, which houses the actuator voice coil motor assembly, has a reduced height to permit micro card 24 to extend below and data channel card 28 to extend thereover. It will be noted that the side walls of box frame 12 do not enclose both ends of a disk diameter. In particular, the box frame side walls do not extend between the disks 8 and outer frame 14 at either end of the diameter that is perpendicular to the outer frame 14 side walls. Accordingly, the thickness of box frame 12 is not interposed between outer frame 14 and disks 8 at the closest approach of the disks to the form factor width and the only enclosure portions present at this minimum clearance, position are the cover 10 and the thin compliant tape 11 that seals cover 10 to box frame 12. Cover 10 includes a reduced height portion 71 over the disk stack where it is not necessary to enclose the transducer suspension assembly in addition to the disk stack. Flex cable 70 extends from micro card 24 and has folded portions 72 which are adhered to the inner wall surfaces of outer frame 14. The motor driver circuits, which require the greatest heat dissipation, are mounted at the interior of rear wall 18 which is provided with an extended heat transfer surface by grooves 33. The motor driver circuits are effectively isolated from the most thermally sensitive portions of the device structure and electronics.

The actuator data channel and servo electronics are connected by a flat cable which connects the transducer coils to the drive electronics outside the HDA 13. Terminations at cable end 76 (which attaches to body 12 about pins 77) of actuator cable 75 are connected to a connector mounted at the lower surface of data card 28 through openings 79. Another end of cable 75, which is obscured by the body 12 in the exploded view, attaches to connector 81 on the card 82. Card 82 is mounted between micro card 24 and data card 28 in the frame corner 26. The interface card 22 that is mounted to the rear wall of box frame 14, includes an interface connector 84 that interchanges data and control signals with the using system, and a power connector 85 through which the device receives power and the required supply voltages.

In summary, to provide for the maximum height or axial distance allowance for storage disks and provide adequate structural stiffness, the disk drive of Figures 1 and 2 uses a cast aluminium box frame to support and partially enclose the spindle shaft, the actuator shaft and the voice coil motor stator portions such as the core elements. This cast box design, with encircling top, bottom and side walls makes the most efficient use of the structural space in the vertical or Z axis direction. The top surface of the casting is placed at the extreme upper limit of the form factor, while the bottom surface is at the bottom of the device form factor less the minimum allowable sway space to allow for shock displacement. This approach, with only a single structural element at top and bottom permits maximised theoretical space for disks and actuator arms. The remainder of the structural enclosure consists of a spindle cover and voice coil motor end cap.

The voice coil motor (VCM) end cap is also a casting and attaches to the box casting by means of four screws serving both to enclose the end and improve the stiffness of the box casting. The spindle cover is fabricated as a deep drawn aluminium element and is secured to the box casting by means of a band of thin compliant tape. The tape affords a seal with minimum thickness (limited increase in the height and width dimensions) and does not distort the box casting. To ensure maximum overall assembly stiffness, the spindle, actuator pivot points and VCM pole pieces are secured with shoulder screws to the bottom box casting wall and are further secured by means of noninfluencing fasteners to the top box casting wall as taught in the copending US Patent Application, Ser. No. 303792. This method of attachment, with both ends secured, enhances the transverse stiffness of the members and ensures a stable set of relationships for parallelism between the spindle axis and the actuator swing arm axis once established during assembly . The long term stability of the parallel relationship is of major importance in preserving data integrity by avoiding excessive track misregistration (TMR) due to relative movements which could cause information recorded on the disk tracks to be no longer recoverable by the read/write head.

## Claims

1. A magnetic disk drive including:
a disk stack assembly with a plurality of disks (8) mounted on a spindle (9) for rotation about a common axis;
an actuator (36) for supporting and positioning, relative to said disks, transducer heads (38) for the transfer of data to and from said disks;
a frame (12) which supports said disk stack assembly at each end of said spindle, and which also supports said actuator;
electrical components (24, 26, 28) for controlling the operation of said disk drive; and characterised in that said disk drive further comprises:
an outer support structure (14) and shock mounting means (16) for supporting said frame within said outer support structure;
and said frame extends across substantially the maximum dimension of said disk drive in a direction axially of said disk stack assembly and wherein said electrical components are mounted on said outer support structure radially of said disk stack assembly.

2. A magnetic disk drive as claimed in claim 1 wherein said actuator is a rotary actuator mounted for rotation about a shaft (40), said shaft being in parallel with said spindle and supported at each end by said frame.

3. A magnetic disk drive as claimed in any preceding claim, wherein said disk drive further includes a cover (10) which adjoins said frame, whereby said disk stack assembly is enclosed within said frame and said cover.

4. A magnetic disk drive as claimed in claim 3, wherein said cover is sealed to said frame by a band of tape (11) which surrounds the junction of said cover with said frame.

5. A magnetic disk drive as claimed in claim 3 or claim 4 wherein said cover is fabricated as a deep drawn thin aluminium element.

6. A magnetic disk drive as claimed in any one of claims 3, 4 or 5, wherein the line of adjoinment between said cover and said frame is arranged so that adjacent the maximum width of said disks, said disks are enclosed by said cover as opposed to said frame.

7. A magnetic disk drive as claimed in any preceding claim, wherein said disk stack assembly is located at one end of said frame, and wherein said frame has an open end opposite said one end, said open end being covered and sealed by a cast cover element (53) secured to said frame.

8. A magnetic disk drive as claimed in any preceding claim, wherein said frame occupies substantially the maximum dimension of said disk drive in a direction axially of said disk stack assembly less clearance for the displacement permitted by said shock mounting means and passage for a flat cable (70) interconnecting said electrical components.

9. A magnetic disk drive as claimed in any preceding claim wherein said frame is a box-type rigid cast member.

10. A magnetic disk drive as claimed in any preceding claim wherein a concentric motor is contained within said disk stack assembly, having a stator supported about said spindle and a rotor portion, including a permanent magnet member, secured to the inside of said disk stack assembly to rotate in unison therewith.

## Patentansprüche

1. Ein Magnetplattenlaufwerk bestehend aus:
einer Plattenstapeleinheit mit mehreren Platten 8, die auf einer Spindel 9 montiert sind und sich um eine gemeinsame Achse drehen;
einem Zugriffsarm 36 zur Aufnahme von Wandlerköpfen 38 für die Übertragung von Daten von und zu den Platten und zur Positionierung der Wandlerköpfe relativ zu den Platten;
einem Rahmen 12, der die Plattenstapeleinheit an den Spindelenden aufnimmt, und an dem der Zugriffsarm befestigt ist;
elektrische Baugruppen 24, 26 und 28 zur Steuerung der Magnetplatteneinheit, wobei zu der Platteneinheit ferner gehört:
ein äußerer Gehäuserahmen 14 und ein Erschütterungsschutz 16 zur Aufnahme des Rahmens in dem Gehäuserahmen;
wobei der Rahmen im wesentlichen die maximale Abmessung der Platteneinheit axial zu der Plattenstapeleinheit einnimmt, und die elektrischen Baugruppen radial um die Plattenstapeleinheit herum an dem äußeren Gehäuserahmen angebracht sind.

2. Eine Magnetplatteneinheit gemäß Anspruch 1, bei welcher der Zugriffsarm sich um eine Welle 40 dreht, wobei die Welle parallel zur Spindel verläuft und an beiden Enden am Rahmen befestigt ist.

3. Eine Magnetplatteneinheit gemäß einem der vorherigen Ansprüche, die ferner eine Abdeckung 10 besitzt, die an den Rahmen angrenzt, so daß die Plattenstapeleinheit durch den Rahmen und die Abdeckung umschlossen ist.

4. Eine Magnetplatteneinheit gemäß Anspruch 3, bei der die Abdeckung mit einem Klebeband 11, das die Verbindungslinie von Rahmen und Abdeckung umschließt, am Rahmen befestigt ist.

5. Eine Magnetplatteneinheit gemäß Anspruch 3 oder 4, bei der die Abdeckung als tiefgezogenes dünnes Aluminiumelement hergestellt ist.

6. Eine Magnetplatteneinheit gemäß Anspruch 3, 4 oder 5, bei der die Verbindungslinie zwischen Abdeckung und Rahmen so verläuft, daß die Platten angrenzend an ihre maximale Breite nicht vom Rahmen, sondern von der Abdeckung umschlossen werden.

7. Eine Magnetplatteneinheit gemäß einem der vorhergehenden Ansprüche, bei der sich die Plattenstapeleinheit an einem Ende des Rahmens befindet und der Rahmen am entgegengesetzten Ende offen ist, wobei das offene Ende durch ein am Rahmen befestigtes Gußelement 53 abgedeckt und abgedichtet ist.

8. Eine Magnetplatteneinheit gemäß einem der vorhergehenden Ansprüche, bei welcher der Rahmen im wesentlichen die maximale Abmessung der Platteneinheit axial zur Plattenstapeleinheit einnimmt, abzüglich des von der Stoßdämpfung benötigten Raums zum Ausgleichen von Erschütterungen und dem Platzbedarf für ein Flachkabel 70, das die elektrischen Komponenten verbindet.

9. Eine Magnetplatteneinheit gemäß einem der vorhergehenden Ansprüche, bei welcher der Rahmen ein starrer Kasten aus Gußmaterial ist.

10. Eine Magnetplatteneinheit gemäß einem der vorhergehenden Ansprüche, bei der sich in der Plattenstapeleinheit ein konzentrischer Elektromotor befindet, dessen Stator auf der Spindel ruht und dessen Rotor einschließlich eines Dauermagneten an der Innenseite der Plattenstapeleinheit angebracht ist und sich in Übereinstimmung mit dieser dreht.

## Revendications

1. Unité de disque magnétique comportant:
un assemblage de disques empilés avec une pluralité de disques (8) montés sur un axe (9) pour tourner autour d'un axe commun;
un dispositif d'actionnement (36) pour supporter et positionner, par rapport auxdits disques, des têtes transductrices (38) pour le transfert de données vers et depuis lesdits disques;
un châssis (12) qui supporte ledit assemblage de disques empilés à chaque extrémité dudit axe, et qui supporte aussi ledit dispositif d'actionnement;
des composants électriques (24, 26, 28) pour commander le fonctionnement de ladite unité de disque; et caractérisée en ce que ladite unité de disque comporte en outre:
une structure (14) de support extérieure et un moyen (16) de montage de choc pour supporter ledit châssis à l'intérieur de ladite structure de support extérieure;
et ledit châssis s'étend sensiblement sur la dimension maximum de ladite unité de disque dans une direction axiale dudit assemblage de disques empilés et dans laquelle lesdits composants électriques sont montés sur ladite structure de support extérieure radialement audit assemblage de disques empilés.

2. Unité de disque magnétique selon la revendication 1 dans laquelle ledit dispositif d'actionnement est un dispositif d'actionnement rotatif monté pour tourner autour d'un arbre (40), ledit arbre étant parallèle audit axe et supporté à chaque extrémité par ledit châssis.

3. Unité de disque magnétique selon l'une quelconque des revendications précédentes, dans laquelle ladite unité de disque comporte en outre un couvercle (10) qui est relié audit châssis, grâce à quoi ledit assemblage de disques empilés est logé à l'intérieur dudit châssis et dudit couvercle.

4. Unité de disque magnétique selon la revendication 3, dans laquelle ledit couvercle est fermé sur ledit châssis par une bande (11) qui entoure la jonction dudit couvercle avec ledit châssis.

5. Unité de disque magnétique selon la revendication 3 ou la revendication 4 dans laquelle ledit couvercle est fabriqué comme un mince élément d'aluminium à emboutissage profond.

6. Unité de disque magnétique selon l'une quelconque des revendications 3, 4 ou 5, dans laquelle la ligne de liaison entre ledit couvercle et ledit châssis est disposée de telle sorte que adjacents à la largeur maximum desdits disques, lesdits disques sont enfermés par ledit couvercle à l'opposé dudit châssis.

7. Unité de disque magnétique selon l'une quelconque des revendications précédentes, dans laquelle ledit assemblage de disques empilés est situé à une extrémité dudit châssis, et dans laquelle ledit châssis a une extrémité ouverte opposée à ladite extrémité, ladite extrémité ouverte étant recouverte et fermée par un élément de couvercle moulé (53) fixé audit châssis.

8. Unité de disque magnétique selon l'une quelconque des revendications précédentes, dans laquelle ledit châssis occupe sensiblement la dimension maximum de ladite unité de disque dans une direction axiale dudit assemblage de disques empilés moins l'espace pour le déplacement permis par lesdits moyens de montage de choc et le passage pour un câble plat (70) interconnectant lesdits composants électriques.

9. Unité de disque magnétique selon l'une quelconque des revendications précédentes dans laquelle ledit châssis est un élément moulé rigide du type boîte.

10. Unité de disque magnétique sleon l'une quelconque des revendications précédentes dans laquelle un moteur concentrique est contenu à l'intérieur dudit assemblage de disques empilés, ayant un stator supporté autour dudit axe et une partie de rotor, comportant un élément à aimant permanent, fixé à l'intérieur dudit assemblage de disques empilés pour tourner avec celui-ci.
